**Europäisches Patentamt**

(19) **European Patent Office**

**Office européen des brevets**

(11) Numéro de publication: **0 038 235**
**B1**

(12) # FASCICULE DE BREVET EUROPEEN

(45) Date de publication du fascicule du brevet:
**18.04.84**

(51) Int. Cl.³: **C 04 B 31/00, C 02 F 11/00**

(21) Numéro de dépôt: **81400468.5**

(22) Date de dépôt: **25.03.81**

(54) **Procédé de traitement de déchets liquides de forte acidité.**

(30) Priorité: **09.04.80 FR 8007917**

(43) Date de publication de la demande:
**21.10.81 Bulletin 81/42**

(45) Mention de la délivrance du brevet:
**18.04.84 Bulletin 84/16**

(84) Etats contractants désignés:
**BE CH DE GB IT LI NL SE**

(56) Documents cités:
**FR - A - 2 146 700**
**FR - A - 2 278 648**
**FR - A - 2 286 116**
**FR - A - 2 320 266**
**US - A - 2 815 293**
**US - A - 4 116 705**
**US - A - 4 149 968**

**Le dossier contient des informations techniques présentées postérieurement au dépôt de la demande et ne figurant pas dans le présent fascicule.**

(73) Titulaire: **Pichat, Philippe, 18, rue des Tournelles, F-75004 Paris (FR)**

(72) Inventeur: **Pichat, Philippe, 18, rue des Tournelles, F-75004 Paris (FR)**

(74) Mandataire: **Cuer, André, CABINET CUER 30, rue de Léningrad, F-75008 Paris (FR)**

Procédé de traitement de déchets liquides de forte acidité

La présente invention a trait au domaine du traitement des déchets liquides, riches en eau, de diverses origines telles qu'industrielles, agricoles ou municipales. Elle concerne plus spécialement un procédé permettant de transformer des déchets fortement acides, de pH inférieur ou égal à 2, en matériaux solides de grande stabilité à l'égard des agents extérieurs tels que l'eau et à fort pouvoir de rétention pour les éléments polluants inclus dans ces déchets.

Le volume croissant des déchets et résidus de tous types constitue un problème de plus en plus préoccupant pour les industriels et les municipalités, compte tenu notamment du fait que ces déchets présentent généralement de grands dangers pour l'environnement et pour les êtres vivants, notamment lorsque ces déchets sont plus ou moins fortement acides.

Bien souvent, la seule solution acceptable aux points de vue économique et écologique est d'effectuer un traitement de ces déchets par solidification physico-chimique. On a déjà proposé dans ce but des techniques qui consistent à mélanger les boues avec des proportions convenables de divers ingrédients tels que: ciment Portland; silicate de sodium avec agent de prise tel que chaux, gypse, carbonate de calcium, mélange de chaux et de pouzzolane; gypse ou plâtre avec résines organiques; bitumes; laitiers métallurgiques en milieu alcalin en présence d'agents catalysant l'hydratation du laitier.

Ces divers procédés ont offert assez souvent des solutions intéressantes au problème de la solidification des déchets boueux, mais ils font appel à des produits de traitement, comme par exemple le ciment Portland ou produits analogues, qui sont de grands consommateurs d'énergie. Par ailleurs, ils ne sont pas adaptés au cas particulier de traitement de boues liquides riches en eau et très fortement acides.

L'invention vise à résoudre ce problème spécifique en mettant en œuvre des agents de traitement qui, considérés eux-mêmes comme des déchets, posent des problèmes éventuels d'environnement mais sont aptes à se substituer en grande partie aux liants hydrauliques jusqu'ici employés pour la solidification ou la pétrification de déchets.

Du fait que de nombreux pays cherchent à substituer à une partie au moins du pétrole le charbon broyé, les centrales thermiques fournissent des quantités de plus en plus grandes de résidus bien connus sous le terme de cendres volantes. Ces cendres, constituées par des aliminosilicates, renferment essentiellement de la silice (42 à 69%), de l'alumine (21 à 49%), du fer (3 à 13% sous forme de $Fe_2O_3 + TiO_2$), du calcium (2 à 10% sous forme de CaO), du magnésium et un certain nombre d'autres éléments à l'état de traces, ainsi que du $SO_3$ (0,4 à 7%). De telles cendres, vitreuses et cristallisées, ne contiennent pratiquement pas de chaux libre et relativement peu de CaO lié, ce qui les distingue des cendres de lignite non envisagées dans la présente invention et qui, elles, présentent des propriétés hydrauliques. Comme on le sait, les cendres de charbon sont pouzzolaniques, c'est-à-dire qu'en présence, par exemple, de chaux, elles s'agglomèrent en un matériau dur, compact et très stable. Des mortiers du type pouzzolanique ont d'ailleurs fait la preuve de leur stabilité depuis l'époque romaine.

Certes, on a déjà préconisé l'emploi de cendres volantes en mélange avec divers produits tels que du ciment Portland, du silicate de sodium ou du laitier de haut fourneau broyé, dans le but de solidifier des boues. Mais, comme dit ci-dessus, les quantités d'ajouts à ces cendres de produits consommateurs de calories sont importantes, et un des buts de l'invention est précisément de diminuer notablement les proportions de ces produits des types ciments artificiels.

Selon le nouveau procédé de l'invention, on mélange aux déchets liquides acides de pH inférieur ou égal à 2 des cendres volantes de charbon, puis on neutralise, en une ou plusieurs étapes, la masse pâteuse jusqu'à pH neutre et procède ensuite à une addition modérée d'un liant contenant de la chaux, le produit final de type mortier étant ensuite, de préférence, déposé sur le site définitif avant la prise.

En fait, une des idées maîtresses à l'origine de l'invention a été d'imaginer un moyen d'activer les cendres volantes dont on sait que les réactions, de caractère pouzzolanique, sont très lentes. Il a été trouvé que la mise en contact avec des produits acides constituait un moyen efficace pour réaliser cette activation, même pour des températures extérieures qui peuvent descendre jusqu'à 0°C et moins. En outre, grâce à la mise au point des étapes ultérieures du procédé, on résout le difficile problème de l'élimination des déchets acides, toxiques ou potentiellement dangereux.

Le procédé de l'invention se distingue en fait totalement de certaines techniques selon lesquelles les déchets à solidifier sont tout d'abord neutralisés, s'ils sont acides, avec de la chaux ou un produit analogue, puis mélangés avec d'autres matériaux riches en sulfates et/ou en alumine, comme par exemple de la cendre volante (brevet français publié No 2146700 ou correspondant américain No 3720609; brevet français publié No 2278648 ou correspondant américain No 4028130; article de E.A. Cassell et al., «J. of Sanitary engineering division proceedings of An. Soc. of civil engineers», février 1970, pp. 15-26; brevet américain No 4116705). Comme cela sera illustré plus loin par les exemples comparatifs 13a et 13b, ces techniques ne permettent pas d'obtenir une solidification rapide au départ des déchets liquides très acides visés par l'invention, en mettant en œuvre les mêmes quantités de réactifs.

On a par ailleurs suggéré de mélanger à un milieu aqueux d'absorption de $SO_2$ de pH 5,5 des cendres volantes, puis de la bentonite et du ciment Portland (exemple 4 du brevet américain No 4149968) pour obtenir un matériau solidifié. Toutefois, une telle technique se distingue du procédé de l'invention dans lequel le déchet doit être très acide, à pH $\leqslant$ 2, pour que, selon une première phase opérationnelle, il se produise une réaction entre le déchet et la cendre volante, par activation de cette dernière, et pour que l'on obtienne rapidement, après neutralisation puis addition du liant calcique, une masse inerte dure.

Le mélange de déchets acides et de cendres volantes est effectué à pression et température ordinaires, par exemple entre 15 et 30°C, mais l'on peut même descendre jusqu'à 0°C et moins, ce qui est intéressant sur chantier. On opère de préférence sous agitation en mettant en œuvre 30 à 260 parties en poids de cendres pour 100 parties de déchets. Le temps de contact est fonction de paramètres tels que l'agitation, le pH, la granulométrie et la composition chimique de la cendre, le type de réacteur utilisé (isolé thermiquement ou non); en pratique ce temps varie entre quelques dizaines de secondes et plusieurs semaines, mais il se trouve généralement situé, dans le cas d'agitation type Vortex, entre 5 et 20 min. L'activation de la cendre volante se traduit, lors du mélange, par une réaction exothermique due à la neutralisation, notamment, des composés calciques de la cendre; la température peut monter jusqu'à 100°C. Durant l'activation de la cendre, par suite de la réaction du déchet acide avec les constituants tels que aluminates, aluminoferrites, silicates, oxydes de calcium, la solution aqueuse acide s'enrichit en ions tels que fer, calcium, aluminium, silice, et la surface spécifique de la cendre augmente rapidement; par exemple, sous l'effet d'un déchet dont l'activité correspond à de l'acide sulfurique normal (N), une cendre de surface Blaine initiale correspondant à 3100 cm²/g atteint en 1 min une surface Blaine de 4100 cm²/g et, en 1 d sous agitation, une surface Blaine de 7600 cm²/g. Enfin, il a été constaté que, au cours du mélange, le pH — initialement de 0 au moins — peut augmenter jusqu'aux alentours d'une valeur voisine de 4. Il en résulte donc une substantielle économie d'agent neutralisant lors de la phase suivante du procédé.

Conformément à la deuxième étape du procédé de l'invention, on neutralise la masse pâteuse jusqu'au voisinage de la neutralité (pH 7) à l'aide de chaux (vive ou éteinte) ou de produits en contenant, tels que craie broyée, calcaire broyé, résidus à base de carbonate de calcium. Selon une variante, on peut opérer en plusieurs temps: par exemple, on neutralise jusqu'à environ pH 4 (si ce pH n'est pas atteint lors du mélange initial) à l'aide de carbonate de calcium, puis on poursuit jusqu'à pH neutre à l'aide de chaux. La neutralisation s'accompagne de diverses réactions de précipitation (aluminates, silicates, borates, zincates, phosphates) et d'absorption, compte tenu des importantes surfaces spécifiques développées.

Selon la dernière étape du procédé, la masse pâteuse neutralisée comme dit ci-dessus est additionnée, sous agitation, d'un liant calcique. Parmi de tels produits, on peut citer à titre non limitatif la chaux vive, les résidus de fabrication de chaux vive ou d'acétylène, la chaux hydraulique naturelle, le ciment Portland, le laitier de haut fourneau, les ciments au laitier, etc. Cette addition ne consiste pas en un simple enrobage des éléments polluants, mais donne lieu à des phénomènes complexes d'absorption, de coprécipitation et de complexation.

En pratique, le rapport pondéral:

$$\frac{\text{cendres volantes}}{\text{Ca (OH)}_2}$$

est maintenu au moins égal à 4 et peut atteindre jusqu'à 8 ou 10, par exemple. Pour un déchet et une température opératoire donnés, la solidification de la masse pâteuse par le liant s'effectue à une vitesse qui est fonction de la formulation et des dosages mis en œuvre. En général, le temps de pétrification varie entre quelques heures et 1 à 2 d, l'opération étant contrôlée à l'aide d'une aiguille de Vicat. Parfois, il est avantageux d'ajouter au liant un sable silicique et/ou calcaire, ou encore un adjuvant comme, par exemple, de l'argile crue. En outre, les réactions peuvent être ralenties, si nécessaire, par addition d'eau, par exemple eau polluée.

Pour la mise en œuvre du procédé selon l'invention, on peut utiliser les moyens et appareillages classiques. Par exemple, le mélange du déchet acide et de la cendre peut se faire dans un malaxeur à mouvement planétaire ou dans une turbine. On ajoute ensuite, dans le même appareil, les réactifs neutralisants, puis le liant sous forte agitation. Le mélange obtenu, qui a la viscosité d'un mortier (par exemple du type ⅓ ciment Portland, ⅓ eau et ⅓ sable), peut être extrait par une trappe coulissante ou par une extrudeuse. De préférence, le transport du déchet traité est effectué pendant la prise et avant la pétrification; il est préférable que la masse en cours de prise soit compactée ou tassée, de façon à diminuer la perméabilité du matériau.

Conformément à une variante de mise en œuvre, on peut répandre les cendres volantes sur un terrain légèrement incliné, puis déverser sur la surface le déchet acide et répandre ensuite le(s) réactif(s) neutralisant(s) et le liant. On homogénéise par un malaxage avec une fraiseuse. Ensuite, le mélange est compacté aux rouleaux vibrants ou à pneus, ou encore simplement avec un bulldozer. Cette technique est avantageusement utilisable lorsque le matériau pétrifié est évidemment destiné à rester sur le site.

Le procédé de l'invention permet de traiter tous types de déchets liquides de forte acidité, notamment de pH < 0, d'origine quelconque: industrielle, minière ou urbaine, et de caractère anorganique, organique ou biologique. Ces déchets peuvent contenir des éléments tels que par exemple cuivre, fer, zinc, chrome, cadmium, nickel, manganèse, métaux alcalins, titane, plomb, vanadium, arsenic, antimoine, bismuth, ainsi que des anions tels que chlorures, sulfates, sulfites, nitrates, nitrites, fluorures, bromures, iodures, phosphates, cyanures, sulfures, borates, thiocyanates, ou encore des composés organiques tels que protides, lipides, glucides, hydrocarbures divers, etc. Enfin, les déchets à traiter peuvent être légèrement radioactifs.

L'invention sera mieux comprise encore par la description détaillée d'exemples de réalisation, cités à titre non limitatif, qui ont trait à des traitements de déchets de compositions et sources diverses.

*Exemples illustratifs:*

Dans les exemples qui suivent, on a traité plusieurs types de déchets liquides fortement acides dont la composition est indiquée dans le tableau 1 qui suit, chaque élément étant exprimé en mg/l × $10^3$ et le terme DCO (demande chimique en oxygène) correspondant à la pullution du déchet.

*Tableau 1*

| Déchet No | pH | Cu | Fe | Zn | Cr | Cd | Ni | Mn | $SO_4^{2-}$ | $NO_3^-$ | DCO |
|---|---|---|---|---|---|---|---|---|---|---|---|
| I | 0 | 2,1 | | 2,6 | 175 | 0,05 | 1,1 | 0,5 | 410 | | 575 |
| II | 0 | 0,22 | 0,90 | 0,40 | 0,35 | 0,001 | 0,5 | 0,005 | 165 | 115 | 550 |
| III | 0 | 9,4 | 81 | 7,6 | 1,6 | 0,038 | 0,65 | 0,65 | | | |
| IV | | 95 | 175 | 1,75 | 35 | 2,2 | 85 | 27 | | 1,5 | 75000 |

La provenance de ces déchets était la suivante: atelier de chromage pour I, décapage d'acier inox pour II, décapage de fer pour III et usine de traitement de déchets industriels dangereux pour IV.

Sauf indications ou précisions contraires, les différents ingrédients mis en œuvre étaient des types suivants:

Cendres volantes (CV) de charbon, de composition: $SiO_2$ : 43%; $Al_2O_3$ : 34%; $Fe_2O_3$ + $TiO_2$ : 8,5%; CaO : 8,7%; MgO : 1,9%; $K_2O$ + $Na_2O$ : 1%; $SO_3$ : 1,9%; perte en fer: 9%

Ciment Portland: type CPA 400, sans ajout

Chaux de qualité métallurgique

Laitier de haut fourneau: finesse Blaine de 4000 environ

Craie de teneur à sec en $CaCO_3$ de 98% environ et de finesse Blaine de 4000

Calcaire grossier de teneur en $CaCO_3$ sec de 89% et de finesse Blaine 9000.

Afin d'évaluer le pouvoir de rétention des éléments polluants dans les produits obtenus selon l'invention, on a utilisé un test de lixiviation simulant l'effet de l'eau stagnante et de mode opératoire suivant: on introduit des échantillons de matériaux solides obtenus selon l'invention dans des pots ouverts en polyéthylène de hauteur 7 cm et diamètre 7 cm (volume 150 ml). Ces récipients sont eux-mêmes déposés à l'intérieur de pots plus grands en polyéthylène, de diamètre inférieur 8,5 cm, diamètre supérieur 11 cm et hauteur 14,5 cm; ces derniers pots sont remplis d'eau distillée. L'ensemble est maintenu à l'air libre et à une température de l'ordre de 18°C. Après au moins une semaine, on dose, par moyens connus, les éléments — notamment cations et anions — contenus dans l'eau distillée et qui n'ont pas été retenus par le solide.

*Exemple 1:*

On a agité 100 g du déchet I avec 130 g de CV pendant 10 min. La température en fin de mélange atteignait 51°C. Après neutralisation jusqu'à pH 7 par de la chaux vive (soit environ 6 g de CaO), on a malaxé avec 20 g de ciment Portland.

En effectuant des essais de lixiviation pendant une semaine sur un échantillon âgé de 28 d du solide obtenu, on a obtenu les résultats suivants pour les proportions de cations non retenus par la masse pétrifiée:

Cu, Fe, Zn, Cr, Cd, Ni, Mn: moins de 0,1 mg/l (chacun)

DCO: inférieure à 20

Un essai de résistance à la compression (Rc) sur un échantillon de même âge, après 20 d de contact avec de l'eau distillée, conformément à la norme AFNOR P 15-413, a donné Rc = 70 bar.

*Exemple 2:*

On a agité 100 g du déchet I avec 140 g de CV pendant environ 10 min. La température était de 54°C. On a ensuite neutralisé à pH 7 avec de la chaux vive (5,67 g de CaO), puis ajouté 20 g de laitier de haut fourneau.

Après lixiviation dans les mêmes conditions qu'à l'exemple 1, on a retrouvé les éléments suivants (mg/l):

Cu, Fe, Zn, Cr, Cd, Ni, Mn: moins de 0,1 (chacun)

$SO_4^{2-}$ : 1,5; $NO_3^-$ : 6

DCO: inférieure à 20

La résistance à la compression (mêmes conditions qu'à l'exemple 1) était Rc = 79 bar.

*Exemple 3:*

Après agitation de 100 g du déchet I avec 115 g de CV pendant 10 min, après lesquelles la température montait à 45°C, on a neutralisé avec de la chaux vive (5,8 g de CaO), puis ajouté comme liant également de la chaux vive en quantité de 21 g.

Les résultats après lixiviation, comme dit dans l'exemple 1, étaient les suivants (mg/l):

Cu, Fe, Zn, Cr, Cd, Ni, Mn: moins de 0,1

$SO_4^{2-}$ : 0

DCO: inférieure à 20

Rc = 23 bar

*Exemple 4:*

On a agité 100 g du déchet acide I avec 122 g de CV pendant 10 min en assurant un refroidissement pour maintenir une température d'environ 22°C. On a neutralisé ensuite jusqu'à pH 7 par addition de 61,5 g de craie, puis incorporé comme liant de la chaux vive (soit 21 g de CaO).

Dans les mêmes conditions qu'à l'exemple 1, les résultats après lixiviation étaient les suivants (mg/l):

Cu, Fe, Zn, Cr, Cd, Ni, Mn: moins de 0,1 (chacun)

$SO_4^{2-}$: 0

$NO_3^-$: 10

DCO: environ 20

Rc: 20 bar

*Exemple 5:*

On est parti ici du déchet acide II en mélangeant à 100 g de ce déchet 86 g de CV pendant 7 min. On a ensuite neutralisé avec de la chaux vive, puis introduit également de la même chaux comme liant, soit au total 22,3 g de CaO.

Les résultats, après lixiviation comme exposé à l'exemple 1, étaient les suivants:

Cu, Fe, Zn, Cr, Cd, Ni, Mn: moins de 0,1 mg/l (chacun)

$SO_4^{--}$: 130

Rc = 60 bar

*Exemple 6:*

On a agité 100 g du déchet II avec 40 g de CV pendant 30 min. On a neutralisé par 29,1 g de craie, puis ajouté comme liant un mélange de chaux vive (11 g de CaO) et de ciment Portland (20 g).

Après 10 d de lixiviation, les teneurs en cations précités restaient inférieures à 0,1 mg/l. La résistance Rc était de 63 bar.

*Exemple 7:*

On a agité pendant 12 min un mélange de 100 g de déchet II avec 101 g de CV. Après neutralisation à pH 7 avec de la chaux vive, on a introduit comme liant un mélange de 14,66 g de chaux vive et de 16,2 g de ciment Portland.

Après lixiviation sur échantillon dans les mêmes conditions qu'à l'exemple 1, chacun des cations précités se trouvait en des quantités négligeables, inférieures à 0,1 mg/l.

La résistance à la compression était de 55 bar après conservation de l'échantillon sous l'eau (20 d) et de 33 bar après conservation en atmosphère à 100% d'humidité et à température de 8°C.

*Exemple 8:*

On a travaillé sur le déchet aqueux acide de type III en mélangeant 100 g de ce déchet avec 120 g de CV pendant environ 20 min. Après neutralisation par la chaux vive (2 g), puis addition comme liant d'un mélange de chaux vive (2 g) et de ciment Portland (16 g), on a obtenu un solide pétrifié après 2 d et présentant sensiblement les mêmes caractéristiques que dans l'exemple 9. La résistance Rc était de 18 bar.

*Exemple 9:*

On a agité 100 g de déchet III avec 21 g de CV pendant 10 min environ. La neutralisation puis l'addition du liant ont ensuite été effectuées avec de la chaux vive, soit au total 28 g de CaO.

Après lixiviation, on a identifié les quantités suivantes de cations (mg/l) non retenues dans le solide pétrifié:

Cu, Fe, Cr, Cd, Ni, Mn: moins de 0,1 (chacun) Zn: 1,2

La résistance à la compression pour un échantillon de même âge après 28 d de contact avec de l'eau distillée (norme AFNOR P 15-413) était de 4 bar.

*Exemple 10:*

On a fait réagir pendant 30 min 120 g de CV avec 100 g du déchet III, puis on a neutralisé avec de la chaux hydraulique naturelle et ajouté comme liant le même produit, soit au total 20 g.

Après lixiviation, on a décelé moins de 0,1 mg/l de chacun des cations Cu, Fe, Zn, Cr, Cd, Ni et Mn.

*Exemple 11:*

Selon un autre mode opératoire, on a laissé en contact pendant 48 h sans agitation le déchet de type II avec le tiers de son poids en CV. Puis on a prélevé 100 g de la phase liquide surnageante et on a ajouté 72 g de CV en maintenant sous agitation pendant 10 min. On a neutralisé avec 29,1 g de calcaire grossier, puis avec quelques grammes de chaux vive, laquelle a également servi de liant ultérieur (au total 8 g de CaO).

Après une semaine de lixiviation, on n'a pas pu déceler plus de 0,1 mg/l des cations Cu, Fe, Zn, Cr, Cd, Ni et Mn.

*Exemple 12:*

On a dissous 30 g du déchet IV, qui présentait à l'origine un pH de 8, dans 70 g de déchet II. Le déchet obtenu avait un pH inférieur à 0. On a fait réagir pendant 7 min ce déchet avec 110 g de CV. Puis on a neutralisé avec 3 g de CaO et l'on a ajouté 18 g de ciment Portland. Le produit pétrifié obtenu avait une Rc de 18 bar. Les teneurs en cations étaient inférieures à 0,1 mg/l, sauf pour le cuivre (2,9 mg/l). La DCO était tombée à 650.

Dans tous ces exemples, les temps de solidification des masses de déchets traités, à température ordinaire et en atmosphère de 70% environ d'humidité, ont tous été inférieurs à 12 h, sauf dans le cas de l'exemple 8 (2 d).

*Exemple 13:*

On a effectué des essais comparatifs dans le but de mettre en évidence les notables différences de résultats, en utilisant, d'une part, une technique déjà décrite pour le traitement des déchets par mélange avec un liant calcique et de la CV (essai 13a) et, d'autre part, le procédé de l'invention qui traite en une phase préliminaire le déchet acide par la CV avant les étapes ultérieures de neutralisation et d'addition de liant (essai 13b).

*Essai 13a:*

On est parti de 100 g de déchet du type II précité, dilués une fois par de l'eau. On a ajouté 8,1 g de chaux éteinte, 18 g de chaux vive (le pH montait alors à 14) et l'on a dispersé 180 g de CV en agitant pendant 5 min. La température du mélange atteignait 45°C après ce temps.

On a laissé reposer le produit puis effectué, après un temps de 11 h, un essai de pénétration à l'aide d'une aiguille Vicat de poids 300 g et de diamètre 4,5 mm. On a constaté que l'aiguille traversait totalement l'échantillon; le matériau n'était donc pas encore solidifié.

Après une nouvelle période de 3½ d, on a effectué un nouvel essai de pénétration avec une aiguille Vicat de 300 g et de diamètre 1 mm. L'aiguille passait de nouveau à travers le matériau.

Après un nouveau temps de 8 d, le produit était apparemment bien solidifié et l'on a alors entrepris le test de lixiviation décrit ci-dessus. Après séjour dans l'eau, l'échantillon en fait se désagrégeait et n'était donc pas stable. On a néanmoins analysé les proportions de cations sur le produit filtré et trouvé les résultats suivants (mg/l): Cu: 0,3; Fe: 0,2; Zn: 0,3; Cr: 0,0; Cd: 0,4; Ni: 0,5.

*Essai 13b:*

A 100 g du même déchet que dans l'essai 13a on a ajouté 180 g de CV. La température montait jusqu'à 62°C et l'on a laissé réagir pendant 60 min. On a constaté que la viscosité du mélange augmentait notablement et que le pH passait à 3 environ. Après ce temps de 60 min, on a ajouté 8,1 g de chaux éteinte et 18 g de chaux vive. On a obtenu un matériau de viscosité nettement plus élevée que dans l'essai 13a.

Après 11 h puis 3½ d, on a effectué les mêmes essais de pénétration à l'aiguille Vicat que dans l'essai 13a. On a constaté que dans les deux cas (aiguille de 4,5 mm puis de 1 mm) il ne se produisait aucune pénétration de l'aiguille dans le matériau qui, dès la première période de 11 h, était solidifié en une masse extrêmement dure. La résistance à la compression, mesurée après 20 d de contact avec de l'eau distillée, était de 120 bar, donc extrêmement élevée.

Après lixiviation pendant une durée de 3 semaines, les cations non retenus par la masse pétrifiée correspondaient aux quantités suivantes (mg/l): Cu: 0,2; Fe: 0,1; Zn: 0,1; Cr: 0,0; Cd: 0,0; Ni: 0,2.

Comme on peut le voir par ces deux essais 13a et 13b, seul le procédé de l'invention a permis d'obtenir rapidement un déchet solidifié résistant à la lixiviation et retenant ses impuretés, matériau d'excellentes propriétés mécaniques.

*Exemple 14:*

Cet exemple a pour but de mettre en évidence l'intérêt, dans certains cas, de substituer à une partie des CV un matériau tel que l'argile.

A 100 g du déchet II dilué une fois par de l'eau distillée on a ajouté 130 g de CV et laissé réagir pendant 7 min environ. Puis on a ajouté 8,09 g de chaux éteinte et 13 g de chaux vive en agitant la masse réactionnelle pendant 5 min. Enfin, on a incorporé au mélange 13 g d'argile crue naturelle.

La masse s'est solidifiée en 24 h environ, et la résistance à la compression du solide était de 26 bar. Après lixiviation, les quantités de cations décelés dans l'eau de lavage étaient les suivantes (mg/l): Cu: 0,2; Fe: 0,2; Zn: 0,1; Cr: 0,0; Cd: 0,4; Ni: 0,4; Mn: 0,4.

**Revendications**

1. Procédé de traitement de déchets liquides riches en eau et de forte acidité (pH ⩽ 2) en vue d'obtenir des matériaux solides stables, non polluants et résistant à la lixiviation par l'eau, le procédé étant caractérisé en ce que l'on mélange tout d'abord les déchets à des cendres volantes de charbon puis neutralise la masse pâteuse jusqu'à pH neutre, et procède ensuite à l'addition d'un liant contenant de la chaux, le produit final de type mortier étant ensuite de préférence déposé sur le site définitif avant la prise.

2. Procédé selon la revendication 1, caractérisé en ce que le mélange de déchets et de cendres volantes est effectué à pression ordinaire et à température allant de moins de 0 à 100°C, de préférence sous agitation et en mettant en œuvre 30 à 260 parties (en poids) de cendres pour 100 parties de déchets.

3. Procédé selon l'une des revendications 1 ou 2, caractérisé en ce que la neutralisation est faite par de la chaux, ou des produits en contenant, jusqu'à obtention d'un pH voisin de 7.

4. Procédé selon la revendication 3, caractérisé en ce que la neutralisation est commencée jusqu'à pH d'environ 4 par ajout de produit riche en carbonate de calcium, puis en ce qu'elle est poursuivie jusqu'à neutralité par addition de chaux.

5. Procédé selon l'une des revendications 3 ou 4, caractérisé en ce que le produit carbonaté est constitué par de la craie broyée, du calcaire broyé ou des résidus à base de carbonate de calcium, et en ce que la chaux est constituée par de la chaux vive ou éteinte.

6. Procédé selon l'une des revendications 1 à 5, caractérisé en ce que le liant est choisi dans le groupe chaux (vive ou éteinte), ciment Portland, résidus de fabrication de chaux, laitier de haut fourneau, et en ce que les quantités de chaux et de cendres volantes (CV) sont telles que l'on ait un rapport: $CV/Ca(OH)_2 \geqslant 4$, ce rapport pouvant atteindre 8 ou plus.

7. Procédé selon l'une des revendications 1 à 6, caractérisé en ce que, après l'addition du liant, on ajoute au mélange de l'argile crue.

8. Procédé selon l'une des revendications 1 à 7, caractérisé en ce qu'il est mis en œuvre dans des unités fixes ou mobiles, en discontinu ou en continu, le mélange de déchets et des réactifs utilisés ayant été préalablement rendu homogène par tout moyen d'agitation connu.

9. Application du procédé selon l'une des revendications 1 à 8 au traitement de tous déchets acides d'origines diverses, industrielles, minières, agricoles ou municipales, les matériaux solides obtenus pouvant être utilisés notamment en génie civil, travaux publics et constructions.

## Patentansprüche

1. Verfahren zur Behandlung wasserreicher, einen niedrigen pH-Wert (pH nicht grösser als 2) aufweisender flüssiger Abfallstoffe zur Herstellung von stabilen festen Stoffen, die kleine Verunreinigung verursachen und gegen Auslaugen durch Wasser widerstandsfähig sind, dadurch gekennzeichnet, dass man zuerst die Abfallstoffe mit Kohleflugasche vermischt, dann die breiige Masse bis zu einem neutralen pH-Wert neutralisiert, wonach als nächster Schritt ein Kalk enthaltendes Blindemittel beigemengt wird, wobei das als mörtelartige Masse vorliegende Endprodukt vorzugsweise in seiner endgültigen Stelle vor dem Abbinden abgelagert wird.

2. Verfahren nach Anspruch 1, dadurch gekennzeichnet, dass das Vermischen der Abfallstoffe mit der Flugasche bei normalem Druck und bei einer zwischen unter 0 und 100° C liegenden Temperatur vorzugsweise unter Umrührung stattfindet, wobei 30 bis 260 Gewichtsteile Flugasche mit 100 Gewichtsteilen Abfallstoff vermischt werden.

3. Verfahren nach einem der Ansprüche 1 oder 2, dadurch gekennzeichnet, dass das Neutralisieren mit Kalk oder kalkenthaltenden Stoffen so lange durchgeführt wird, bis der pH-Wert beinahe 7 entspricht.

4. Verfahren nach Anspruch 3, dadurch gekennzeichnet, dass das Neutralisieren zunächst durch Beimengen von einem an Kalziumcarbonat reichen Produkt bis zu einem pH-Wert von ca. 4 und danach bis zur Neutralität durch das Hinzufügen von Kalk durchgeführt wird.

5. Verfahren nach einem der Ansprüche 3 oder 4, dadurch gekennzeichnet, dass als Carbonatprodukt zerkleinerte Kreide, zerkleinerter Kalkstein und Reststoffe auf Basis von Kalziumcarbonat verwendet wird und dass der Kalk als gebrannter oder gelöschter Kalk vorliegt.

6. Verfahren nach einem der Ansprüche 1 bis 5, dadurch gekennzeichnet, dass das Bindemittel aus folgender Stoffgruppe: gebrannter oder gelöschter Kalk, Portlandzement, Kalkverarbeitungsreststoffe und Hochofenschlacke ausgewählt wird, und dass die Mengen an Kalk und an Flugasche so gewählt sind, dass das Verhältnis Flugasche zu $Ca(OH)_2$ mindestens gleich 4 ist und einen Wert von 8 oder mehr erreichen kann.

7. Verfahren nach einem der Ansprüche 1 bis 6, dadurch gekennzeichnet, dass nach der Beimischung des Bindemittels unverarbeiten Ton beigemengt wird.

8. Verfahren nach einem der Ansprüche 1 bis 7, dadurch gekennzeichnet, dass es in feststehenden oder beweglichen Einheiten, kontinuierlich oder diskontinuierlich durchgeführt wird, wobei durch ein bekanntes Verfahren das Gemisch der Abfallstoffe und der verwendeten Reaktivstoffe bis zur Homogenität vorher verarbeitet worden ist.

9. Anwendung des Verfahrens nach einem der Ansprüche 1 bis 8 zur Behandlung von beliebigen sauren Reststoffen, die aus der Industrie, aus Bergwerken, aus der Landwirtschaft, aus Städten stammen, wobei die festen erhaltenen Stoffe im Tiefbau und im Bauwesen verwendet werden.

## Claims

1. Process for treating liquid wastes diluted in water and processing strong acidity (pH ≤ 2) to obtain stable solid materials that are nonpolluting and resistant to water leaching, the process being characterized in that first the wastes are mixed with coal fly ash, then the pasty mass is neutralized to neutral pH and finally a binder containing lime is added, the mortar type product obtaines preferably being deposited on the final site before setting.

2. Process according to claim 1, wherein mixing of the wastes and fly ash is performed at regular pressure and at a temperature ranging from below 0 to 100° C, preferably with stirring, using about 30 to 260 parts by weight of ash for 100 parts of the waste.

3. Process according to one of claims 1 or 2, wherein neutralization is effected using lime or products containing lime until a pH close to 7 is obtained.

4. Process according to claim 3, wherein neutralization is initiated to attain a pH of about 4 by the addition of a product rich in calcium carbonate, and then is continued to reach a pH of neutrality by the addition of lime to the mixture.

5. Process according to one of claims 3 or 4, wherein the calcium carbonate product consists of a composition selected from the group consisting of ground chalk, ground limestone and residues derived from calcium carbonate base, and wherein the lime composition consist of either quickline or slaked lime.

6. Process according to one of claims 1 to 5, wherein the binder is selected from the group consisting of quicklime, slaked lime, Portland cement, lime manufacture wastes and blast furnace slags, and wherein the amounts of lime and fly ash are such that there is a ratio of fly ash to $Ca(OH)_2 \geqslant 4$, this ratio approximating 8 or more.

7. Process according to one of claims 1 to 6, wherein, after addition of the binder, raw clay is added to the mixture.

8. Process according to one of claims 1 to 7, wherein the mixture of wastes and reagents used, which have previously been made homogeneous by any known stirring means, is used in stationary or mobile units continuously or in batch.

9. Application of the process according to one of claims 1 to 8 to treatment of all acidic wastes of various origins, industrial, mining, agricultural or municipal, the resulting solid materials being able to be used particularly in civil engineering, public works or construction.